## Europäisches Patentamt
### European Patent Office
### Office européen des brevets

(11) Veröffentlichungsnummer: **0 337 100**

**A2**

# EUROPÄISCHE PATENTANMELDUNG

(21) Anmeldenummer: **89103816.8**

(51) Int. Cl.⁴: **G01P 3/48**

(22) Anmeldetag: **04.03.89**

(30) Priorität: **31.03.88 DE 3811046**

(43) Veröffentlichungstag der Anmeldung:
**18.10.89 Patentblatt 89/42**

(84) Benannte Vertragsstaaten:
**CH DE FR GB IT LI SE**

(71) Anmelder: **Heidelberger Druckmaschinen Aktiengesellschaft**
**Kurfürsten-Anlage 52-60 Postfach 10 29 40**
**D-6900 Heidelberg 1(DE)**

(72) Erfinder: **Krüger, Michael**
**Zeisigweg 1**
**D-6803 Edingen-Neckarhausen(DE)**

(74) Vertreter: **Stoltenberg, Baldo Heinz-Herbert et al**
**c/o Heidelberger Druckmaschinen AG**
**Kurfürsten-Anlage 52-60**
**D-6900 Heidelberg 1(DE)**

(54) **Verfahren und Anordnung zur Messung der Drehzahl.**

(57) Bei einem Verfahren zur Messung der Drehzahl eines Gleichstrom-Nebenschlußmotors oder des rotierenden Teils einer elektro-magnetisch betätigten Bremse wird eine dem Wechselanteil des Feldstroms bzw. Wicklungsstroms entsprechende Spannung einer Frequenzanalyse unterworfen, wobei vorzugsweise Spektralanteile berücksichtigt werden, die Drehzahlen zuzuordnen sind, welche innerhalb der Grenzen eines aufgrund sonstiger Betriebsbedingungen vorgegebenen Drehzahlbereichs liegen. Dabei kann die Wechselspannung einer Fourier-Transformation unterzogen oder einem steilwandigen Bandpaß zugeführt werden, an dessen Ausgang ein Komparator geschaltet ist.

Fig. 2

## Verfahren und Anordnung zur Messung der Drehzahl

Die Erfindung betrifft ein Verfahren und eine Anordnung zur Messung der Drehzahl eines Gleichstrom-Nebenschlußmotors oder des rotierenden Teils einer elektro-magnetisch betätigten Bremse. Die Drehzahlerfassung ist mittels analoger und digitaler Drehzahlsensoren bekannt. Dabei ist der zusätzliche Aufwand für den Sensor und bei vielen Anwendungsfällen auch der Aufwand für die zusätzliche Leitungsführung nachteilig.

Ferner ist ein Verfahren zur Drehzahlmessung aus der Kommutierungswelligkeit des Ankerstroms bekannt (Elektronik Sonderheft 1986, Nr. 230, S. 55). Dieses Verfahren weist jedoch den Nachteil auf, daß die Zahl der Kollektorlamellen bekannt sein muß.

Bei einer Druckmaschine erfolgt in bekannter Weise eine Geschwindigkeitsregelung über einen an der Maschine angebrachten Drehzahlsensor. Dabei verfügt der Antriebsmotor über keinen Drehzahlsensor. Die Drehzahlführung erfolgt über die Regelung der Ankerspannung. Der Antrieb der Druckmaschine durch den Motor erfolgt über ein Riemengetriebe, dessen Übersetzungsverhältnis jeweils zur Anpassung der variablen maximalen Drehzahl der Druckmaschine an die feste maximale Drehzahl des Motors gewählt ist. Für eine optimale Regelung der Drehzahl der Druckmaschine ist jedoch nicht nur die Drehzahl der Maschine, sondern auch die Drehzahl des Motors zu erfassen, wozu bei bekannten Maschinen ein weiterer Drehzahlsensor verwendet wird.

Aufgabe der vorliegenden Aufgabe ist es daher, bei einem Gleichstrom-Nebenschlußmotor eine Messung der Drehzahl ohne die Verwendung eines Drehzahlsensors zu ermöglichen. Insbesondere dient das erfindungsgemäße Verfahren dazu, bei einer Maschine, vorzugsweise einer Druckmaschine, das Übersetzungsverhältnis zwischen dem Antriebsmotor und einer an dem Motor über ein Getriebe angetriebenen Welle der Maschine zu ermitteln.

Ein erfindungsgemäßes Verfahren ist dadurch gekennzeichnet, daß eine dem Wechselanteil des Feldstroms entsprechende Spannung einer Frequenzanalyse unterworfen wird. Ein anderes erfindungsgemäßes Verfahren ist dadurch gekennzeichnet, daß eine dem Wechselanteil des Stroms einer Wicklung der elektro-magnetisch betätigten Bremse entsprechende Spannung einer Frequenzanalyse unterworfen wird.

Eine Weiterbildung besteht darin, daß Spektralanteile berücksichtigt werden, die Drehzahlen zuzuordnen sind, welche innerhalb der Grenzen eines aufgrund sonstiger Betriebsbedingungen vorgegebenen Drehzahlbereichs liegen.

Durch die erfindungsgemäßen Verfahren ist die Einsparung eines Drehzahlsensors möglich. Als weiterer Vorteil ist anzusehen, daß die erfindungsgemäßen Verfahren weitgehend unabhängig von der Bauform des Gleichstrom-Nebenschlußmotors (Polzahl, Lamellenzahl) bzw. der Bremse sind. Die erfindungsgemäßen Verfahren sind zur Anwendung bei verschiedenen Antriebssystemen geeignet. Die sich bei der Frequenzanalyse ergebenden nicht für die Drehzahlmessung geeigneten Spektrallinien, wie beispielsweise die Netzfrequenz und deren Oberwellen, lassen sich bei vielen dieser Anwendungsfälle in einfacher Weise eliminieren.

Eine andere Weiterbildung besteht darin, daß die Wechselspannung einer Fourier-Transformation unterzogen wird und daß die Frequenz einer zwischen den Grenzen des vorgegebenen Drehzahlbereichs liegenden Spektrallinie als Drehzahl ausgegeben wird. Dabei ergibt sich ein besonderer Vorteil durch die Anwendung einer schnellen Fourier-Transformation (FFT), für die geeignete Signalprozessoren erhältlich sind.

Häufig wird eine Drehzahlerfassung vorgenommen, um festzustellen, wann ein Motor eine vorgegebene Drehzahl erreicht. Diese Aufgabe wird mit einer anderen Weiterbildung dadurch gelöst, daß die Wechselspannung einem steilwandigen Bandpaß zugeführt wird, an dessen Ausgang ein Komparator geschaltet ist, daß die Drehzahl des Motors innerhalb eines vorgegebenen Bereichs verändert wird und daß die der Grenzfrequenz des Bandpasses entsprechende Drehzahl als zum Zeitpunkt einer Änderung der Ausgangsspannung des Komparators gültige Drehzahl ausgegeben wird.

Bei einem Verfahren, bei welchem das Übersetzungsverhältnis zwischen dem Motor und einer über ein Getriebe mit dem Motor verbundenen Welle einer Maschine überprüft wird, ist gemäß einer anderen Weiterbildung der Erfindung vorgesehen, daß die Drehzahl der Welle in an sich bekannter Weise gemessen wird, daß aus der gemessenen Drehzahl der Welle und einem vorgegebenen Bereich für das Übersetzungsverhältnis der vorgegebene Drehzahlbereich ermittelt wird und daß die Drehzahl des Motors und die Drehzahl der Welle miteinander in Beziehung gesetzt werden.

Eine Anordnung zur Durchführung des Verfahrens zur Überprüfung des Übersetzungsverhältnisses ist dadurch gekennzeichnet, daß ein Gleichstrom-Nebenschlußmotor über ein Getriebe mit einer Welle einer Maschine verbunden ist, daß an die Welle ein Drehzahlsensor angeschlossen ist, daß eine Einrichtung zur Steuerung der Drehzahl des Gleichstrom-Nebenschlußmotors und einer Anordnung zur Erzeugung eines Feldstroms vorgesehen sind, daß an den Feldstromkreis ein Strom/Spannungs-Wandler angeschlossen ist, dessen Ausgang über eine Einrichtung zur Frequenzanalyse mit einem Mikrocomputer verbunden ist, und daß Ausgangssignale des Drehzahlsensors dem Mikrocomputer zuführbar sind. Häufig sind derartige Maschinen mit einem Riemengetriebe ausgerüstet. Bei einem Wechsel der Riemenscheibe kann daher automatisch das Übersetzungsverhältnis ermittelt und in das System zur Steuerung der Maschine eingegeben werden. Eine besonders günstige Ausgestaltung der erfindungsgemäßen Anordnung besteht darin, daß das Getriebe ein Riemengetriebe ist.

Insbesondere kann bei der erfindungsgemäßen Anordnung vorgesehen sein, daß die Einrichtung zur Frequenzanalyse ein Signalprozessor ist, der für die Durchführung einer schnellen Fourier-Transformation (FFT) eingerichtet ist.

Eine andere Ausgestaltung der erfindungsgemäßen Anordnung besteht darin, daß die Einrichtung zur Frequenzanalyse aus einem steilwandigen Bandpaß, einer Gleichrichterschaltung und einem Komparator besteht und daß die Drehzahlsteuereinrichtung von dem Mikrocomputer steuerbar ist.

Ausführungsbeispiele der Erfindung sind in der Zeichnung anhand mehrerer Figuren dargestellt und in der nachfolgenden Beschreibung näher erläutert. Es zeigt:

Fig. 1 das Spektrum des Wechselanteils des Feldstroms eines Gleichstrom-Nebenschlußmotors bei einer vorgegebenen Drehzahl,

Fig. 2 ein erstes Ausführungsbeispiel,

Fig. 3 Zeitdiagramme von beim ersten Ausführungsbeispiel auftretenden Signalen,

Fig. 4 ein zweites Ausführungsbeispiel und

Fig. 5 ein Flußdiagramm eines Programms für den bei den Ausführungsbeispielen verwendeten Mikrocomputer.

Gleiche Teile sind in den Figuren mit gleichen Bezugszeichen versehen.

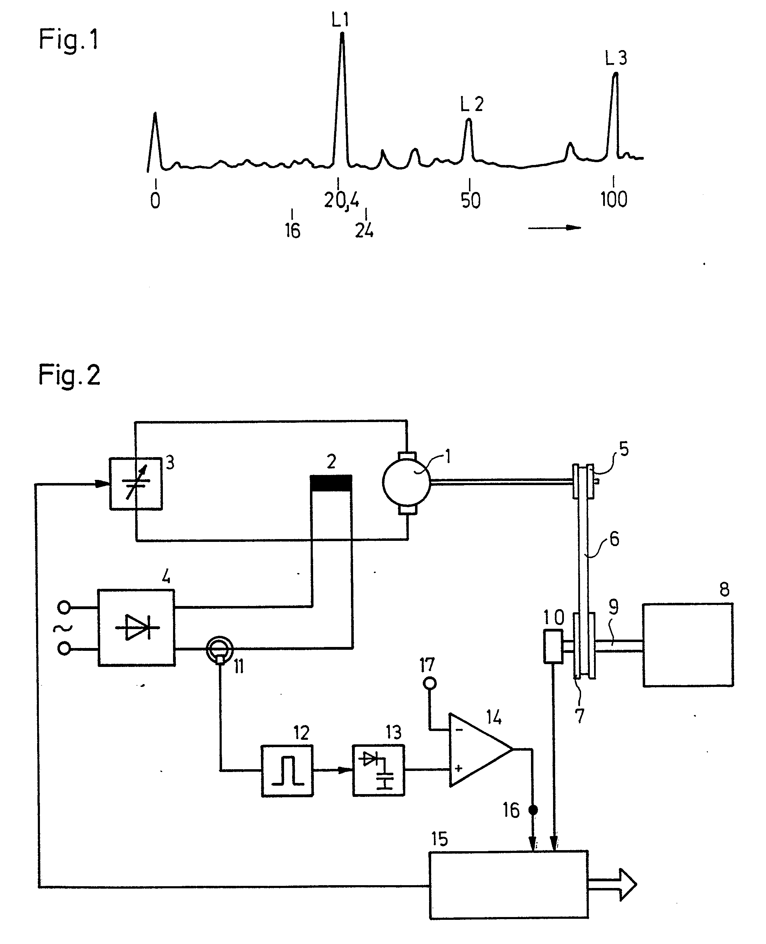

Fig. 1 zeigt beispielhaft das Spektrum des Feldstroms eines Gleichstrom-Nebenschlußmotors bei einer Drehzahl von 20,4 $s^{-1}$ bzw. 1224 $min^{-1}$. Dementsprechend enthält das Spektrum bei dieser Frequenz eine ausgeprägte Linie L1. Andere Linien L2, L3 bei Frequenzen von 50 Hz und 100 Hz ergeben sich aus der Restwelligkeit des aus der Netzwechselspannung gewonnenen Gleichstroms. Wahrend das Vorhandensein von Linien bei 50 Hz und bei 100 Hz unabhängig von der jeweiligen Drehzahl ist, verschieben sich die anderen Linien, insbesondere die Linie L1 mit der Drehzahl.

Bei der Anordnung nach Fig. 1 ist ein Gleichstrom-Nebenschlußmotor mit einem Anker 1 und einer Feldwicklung 2 vorgesehen. Der Anker 1 ist an eine steuerbare Gleichspannungsquelle 3 angeschlossen, während die Feldwicklung 2 über eine Gleichrichteranordnung 4 Gleichspannung aus dem Wechselstromnetz enthält. Auf der Welle des Gleichstrom-Nebenschlußmotors ist eine Riemenscheibe 5 angeordnet, welche zusammen mit einem Riemen 6 und einer weiteren Riemenscheibe 7 ein Getriebe darstellt, mit dessen Hilfe der Gleichstrom-Nebenschlußmotor eine lediglich schematisch dargestellte Maschine 8 antreibt. Auf der Antriebswelle 9 der Maschine 8 befindet sich ferner ein Drehzahlsensor 10.

Der Feldstrom wird mit Hilfe eines Stromsensors 11 gemessen, der beispielsweise nach dem Hallprinzip arbeitet und eine dem Feldstrom proportionale Spannung abgibt. An sich wird zur Durchführung des erfindungsgemäßen Verfahrens lediglich der Wechselanteil benötigt. Dieser wird jedoch ohnehin nicht vom Bandpaßfilter 12 durchgelassen. Das Bandpaßfilter 12 weist relativ steile Flanken des Durchlaßbereichs auf. Eine der Flanken des Bandpaßfilters 12 liegt bei derjenigen Frequenz, welche einer Drehzahl des Motors entspricht, bei welcher die Drehzahl der Maschine gemessen und somit das Übersetzungsverhältnis ermittelt werden soll.

An den Ausgang des Bandpaßfilters 12 ist eine Gleichrichterschaltung 13 und ein Komparator 14 angeschlossen. Der Ausgang des Komparators 14 ist mit einem Eingang des Mikrocomputers 15 verbunden, welchem auch die vom Drehzahlsensor 10 erzeugten Impulse zugeführt werden.

Bei der Anordnung nach Fig. 2 kann das Übersetzungsverhältnis, das durch die Größe der Riemenscheibe 5, 7 gegeben ist, von Maschine zu Maschine verschieden sein, da eine Anpassung der variablen maximalen Druckzahl der Druckmaschine an die feste Maximaldrehzahl des Motors erforderlich ist. So ist beispielsweise bei einer praktisch ausgeführten Maschine bei einem Durchmesser der Riemenscheibe 7 von 142 mm die Druckzahl 11000, wahrend bei einem Durchmesser von 155 mm die Druckzahl 12000 ist.

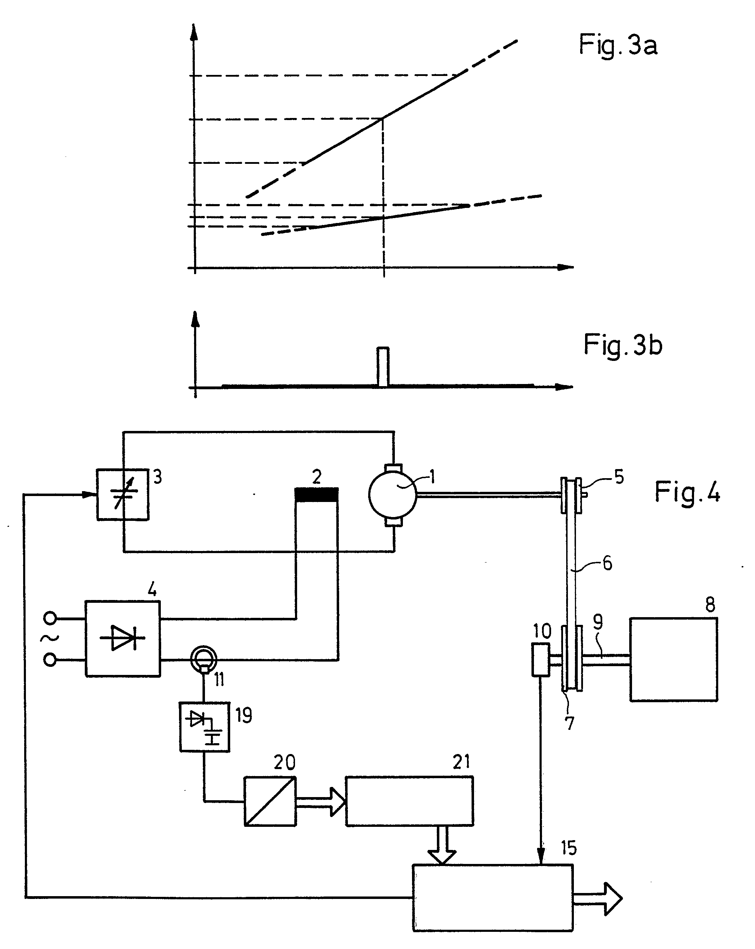

Die Funktion der Anordnung nach Fig. 2 wird im folgenden anhand der Diagramme gemäß Fig. 3 erläutert. Die Ermittlung der Drehzahl bzw. des Übersetzungsverhältnisses kann dabei während eines dafür vorgesehenen Probelaufs, beispielsweise nach dem erstmaligen Einschalten der Maschine erfolgen. Sie ist jedoch auch beim normalen Betrieb möglich, wenn geeignete Drehzahlen während eines geeigneten Zeitraums vorliegen.

Gesteuert vom Mikrocomputer 15 wird der Anker 1 des Gleichstrom-Nebenschlußmotors mit einer derartigen Spannung versorgt, daß die Drehzahl einen vorgegebenen Bereich entsprechend Fig. 3a) durchfährt. Dabei steigt die Drehzahl des Motors von nmot-u auf nmot-o, während die Drehzahl der Maschine von nma-u auf nma-o steigt.

Letzteres wird mit Hilfe der von dem Drehzahlsensor 10 erzeugten Impulse festgestellt. Der Eingang 16 des Mikrocomputers 15 ist nur während dieses Drehzahlbereichs aktiv.

Der Drehzahlbereich ist derart gewählt, daß einerseits eine Erfassung aller vorkommenden Übersetzungsverhältnisse möglich ist und daß andererseits bei der Erfassung der Spektrallinie eine Eindeutigkeit vorliegt. Ist beispielsweise die dem Komparator bei 17 zugeführte Vergleichsspannung derart groß, daß bei dem Spektrum gemäß Fig. 1 die Linien L1, L2, L3 erfaßt werden, so kann beispielsweise der Drehzahlbereich des Motors von nmot-u = 16 s$^{-1}$ bis nmot-u = 24 s$^{-1}$ liegen. Während dieser Drehzahlbereich des Motors durchfahren wird, befindet sich nur die Linie L1 im entsprechenden Spektralbereich.

Das Bandpaßfilter 12 ist nun derart abgestimmt, daß seine untere Flanke bei derjenigen Frequenz liegt, bei welcher das Übersetzungsverhältnis bestimmt bzw. überprüft werden soll. Diese Drehzahl nmot-ist wird bei tm erreicht, was mit einem Signalsprung in Fig. 3b) dargestellt ist. Zu diesem Zeitpunkt wird der Wert nma-ist der Drehzahl der Maschine in den Mikrocomputer eingelesen. Durch eine Division der Drehzahl des Motors, welche zu diesem Zeitpunkt der unteren Grenzfrequenz des Bandpaßfilters 12 entspricht und des eingelesenen Drehzahlwertes nma-ist, ist die Bestimmung des Übersetzungsverhältnisses ü möglich. Dieser Wert kann über einen Datenbus 18, beispielsweise an ein übergeordnetes Steuersystem für die Maschine, abgegeben werden. Bei weiterem Ansteigen der Drehzahl wird gegebenenfalls die obere Grenzfrequenz des Bandpaßfilters 12 überschritten, so daß die in Zeile b) dargestellte Ausgangsspannung der Gleichrichterschaltung wieder fällt.

Bei der Anordnung gemäß Fig. 4 erfolgt die Spektralanalyse mit Hilfe eines Signalprozessors 21, dem der Wechselanteil des Feldstroms über ein Hochpaßfilter 19 und einen Analog/Digital-Wandler 20 zugeführt wird. In an sich bekannter Weise ist der Signalprozessor 21 zur Durchführung einer schnellen Fourier-Transformation (FFT) programmiert. Ausführliche Angaben zur Programmierung eines Signalprozessors vom Typ TMS 320 der Firma Texas Instruments für die FFT finden sich in R. Küng, "Flexibler FFT-Prozessor löst Echtzeitaufgaben", Elektronik 21, 17.10.86, S. 101 bis 110. Das Ergebnis wird dem Mikrocomputer 15 zugeführt. Hierbei ist kein Durchfahren eines vorgegebenen Drehzahlbereichs wie bei der Anordnung nach Fig. 2 erforderlich. Es wird lediglich über die Spektrallinie L1 und die Ausgangsimpulse des Drehzahlsensors 10 das Drehzahlverhältnis ermittelt, wenn sich die Drehzahl innerhalb des vorgegebenen Bereichs befindet.

Fig. 5 zeigt in Flußdiagramm eines Programms, mit welchem überpruft wird, ob das Übersetzungsverhältnis ü-ist einem vorgegebenen Übersetzungsverhältnis ü-soll entspricht. Dazu wird nach einem Start des Programms bei 23 ein Drehzahlsollwert nma-soll für die Maschine und ein Übersetzungsverhältnis ü-soll vorgegeben (Programmteil 24). Danach wird bei 25 die Ist-Drehzahl nma-ist der Maschine eingelesen und bei 26 mit der Soll-Drehzahl nma-soll der Maschine verglichen. Solange die Drehzahlen nicht übereinstimmen, wird eine Schleife, bestehend aus den Programmschritten 25 und 26, wiederholt. Erst wenn die Drehzahlen übereinstimmen, erfolgt eine Frequenzmessung bei 27, wozu die entsprechende Frequenz der Spektrallinie L1 (Fig. 1) aus dem Signalprozessor 21 (Fig. 4) in den Mikrocomputer übernommen wird.

Im Programmteil 28 wird dann aus den ermittelten bzw. vorgegebenen Werten das Übersetzungsverhältnis ü-ist errechnet. Dieses wird bei 29 mit dem Sollwert ü-soll für das Übersetzungsverhältnis verglichen. Bei Übereinstimmung wird die Richtigkeit des Übersetzungsverhältnisses bei 30 gemeldet, während bei Nichtübereinstimmung bei 31 eine Fehlermeldung ausgegeben wird.

In einigen Anwendungsfällen, insbesondere bei Druckmaschinen mit nur einem oder zwei Druckwerken, ist der Momentenverlauf der Last über dem Drehwinkel sehr ungleichförmig. Wird zudem ein besonders weicher Drehzahlregler eingesetzt, so treten stärkere Drehzahlschwankungen des Antriebs auf. Hierdurch wird die Feststellung der Motordrehzahl erschwert. Entsprechend der Dynamik der verschiedenen Drehzahlen ist eine Auswertung mit ausreichender Schnelligkeit erforderlich.

Ist die Arbeitsgeschwindigkeit der Auswerteschaltung in den Ausführungsbeispielen, also die des Mikrocomputers 15, zu gering, um den Schwankungen der Drehzahl zu folgen, so ist eine mehrfache Messung und eine anschließende Mittelung vorzunehmen.

Die Erfindung ist nicht auf das Ausführungsbeispiel beschränkt, sondern kann vom Fachmann auch in anderer Weise verwirklicht werden. So kann beispielsweise durch ein entsprechendes Programm im Mikrocomputer eine andere Spektrallinie gesucht und ausgewertet werden, wenn die an sich zur Auswertung vorgesehene Spektrallinie zu schwach oder gestört ist. Weitere Ausführungsformen sind durch andere Signalfilterverfahren oder Schaltungen möglich.

## Ansprüche

1. Verfahren zur Messung der Drehzahl eines Gleichstrom-Nebenschlußmotors, dadurch gekennzeichnet, daß eine dem Wechselanteil des Feldstroms entsprechende Spannung einer Frequenzanalyse unterworfen wird.

2. Verfahren zur Messung der Drehzahl des rotierenden Teils einer elektro-magnetisch betätigten Bremse, dadurch gekennzeichnet,
daß eine dem Wechselanteil des Stroms einer Wicklung der elektro-magnetisch betätigten Bremse entsprechende Spannung einer Frequenzanalyse unterworfen wird.

3. Verfahren nach Anspruch 1 oder 2, dadurch gekennzeichnet,
daß Spektralanteile berücksichtigt werden, die Drehzahlen zuzuordnen sind, welche innerhalb der Grenzen eines aufgrund sonstiger Betriebsbedingungen vorgegebenen Drehzahlbereichs liegen.

4. Verfahren nach einem der vorhergehenden Ansprüche, dadurch gekennzeichnet,
daß die Wechselspannung einer schnellen Fourier-Transformation (FFT) unterzogen wird und daß die Frequenz einer zwischen den Grenzen des vorgegebenen Drehzahlbereichs liegenden Spektrallinie als Drehzahl ausgegeben wird.

5. Verfahren nach einem der Ansprüche 1 bis 3, dadurch gekennzeichnet,
daß die Wechselspannung einem steilwandigen Bandpaß zugeführt wird, an dessen Ausgang ein Komparator geschaltet ist,
daß die Drehzahl des Motors innerhalb eines vorgegebenen Bereichs verändert wird und
daß die der Grenzfrequenz des Bandpasses entsprechende Drehzahl als zum Zeitpunkt einer Änderung der Ausgangsspannung des Komparators gültige Drehzahl ausgegeben wird.

6. Verfahren nach einem der vorhergehenden Ansprüche, bei welchem das Übersetzungsverhältnis zwischen dem Motor und einer über ein Getriebe mit dem Motor verbundenen Welle einer Maschine überprüft wird, dadurch gekennzeichnet,
daß die Drehzahl der Welle in an sich bekannter Weise gemessen wird,
daß aus der gemessenen Drehzahl der Welle und einem vorgegebenen Bereich für das Übersetzungsverhältnis der vorgegebene Drehzahlbereich ermittelt wird und daß die Drehzahl des Motors und die Drehzahl der Welle miteinander in Beziehung gesetzt werden.

7. Anordnung zur Durchführung des Verfahrens nach Anspruch 6, dadurch gekennzeichnet,
daß ein Gleichstrom-Nebenschlußmotor (1, 2) über ein Getriebe (5, 6, 7) mit einer Welle (9) einer Maschine (8) verbunden ist,
daß an die Welle (9) ein Drehzahlsensor (10) angeschlossen ist,

daß eine Einrichtung (3) zur Steuerung der Drehzahl des Gleichstrom-Nebenschlußmotors und einer Anordnung (4) zur Erzeugung eines Feldstroms vorgesehen sind,
daß an den Feldstromkreis ein Strom/Spannungs-Wandler (11) angeschlossen ist, dessen Ausgang über eine Einrichtung (12 bis 14, 21) zur Frequenzanalyse mit einem Mikrocomputer (15) verbunden ist, und
daß Ausgangssignale des Drehzahlsensors (10) dem Mikrocomputer (15) zuführbar sind.

8. Anordnung nach Anspruch 7, dadurch gekennzeichnet, daß das Getriebe ein Riemengetriebe (5, 6, 7) ist.

9. Anordnung nach einem der Ansprüche 7 oder 8, dadurch gekennzeichnet,
daß die Einrichtung zur Frequenzanalyse ein Signalprozessor (21) ist, der für die Durchführung einer schnellen Fourier-Transformation (FFT) eingerichtet ist.

10. Anordnung nach einem der Ansprüche 7 oder 8, dadurch gekennzeichnet,
daß die Einrichtung zur Frequenzanalyse aus einem steilwandigen Bandpaß (12), einer Gleichrichterschaltung (13) und einem Komparator (14) besteht und
daß die Drehzahlsteuereinrichtung (3) von dem Mikrocomputer (15) steuerbar ist.

11. Verfahren nach einem der Ansprüche 1 bis 6, dadurch gekennzeichnet,
daß im Falle einer zur Auswertung ungeeigneten Spektrallinie eine andere Spektrallinie, vorzugsweise die einer Oberwelle, ausgewertet wird.

Fig.1

Fig.2

Fig. 3a

Fig. 3b

Fig. 4